# EUROPEAN PATENT APPLICATION

(11) **EP 4 534 233 A1**
(43) Date of publication of application: **09.04.2025**
(21) Application number: 23811982.0
(22) Date of filing: 04.04.2023
(51) Int. Cl.: B23K 26/362, B23K 26/08, B23K 26/16, B08B 15/04, B23K 37/04, H01M 50/536

(54) **LASER NOTCHING APPARATUS**

(30) Priority: 27.05.2022 KR 20220065686
(71) Applicant: LG Energy Solution, Ltd., Seoul 07335 (KR)
(72) Inventor: SON, Jong In, Daejeon 34122 (KR); JANG, Kyung Min, Daejeon 34122 (KR); KIM, Yong Han, Daejeon 34122 (KR); LEE, So Ra, Daejeon 34122 (KR); KIM, Min Ji, Daejeon 34122 (KR)
(74) Representative: Goddar, Heinz J.
(86) International application number: PCT/KR2023/004531
(87) International publication number: WO 2023/229205

(57) **Abstract**

According to an embodiment of the present disclosure, there is provided a laser notching apparatus capable of forming an electrode tab on an electrode sheet through a notching process. The laser notching apparatus includes: a laser unit configured to emit a laser beam onto the electrode sheet, a rotating drum which is in contact with the electrode sheet to move the electrode sheet, a fixed drum positioned on one side of the rotating drum in an axial direction, and a scrap-suctioning part provided in the fixed drum and configured to suction a scrap that is cut from the electrode sheet by the laser beam.

## Description

### TECHNICAL FIELD

### CROSS-REFERENCE TO RELATED APPLICATIONS

This application claims the priority of Korean Patent Application No.10-2022-0065686 filed on May 27, 2022, in the Korean Intellectual Property Office, the disclosure of which is incorporated herein by reference.

### TECHNICAL FIELD

The present invention relates to a laser notching apparatus and, more specifically, to a laser notching apparatus for forming an electrode tab on an electrode sheet through a notching process.

### BACKGROUND ART

In general, there are several types of secondary batteries such as nickel cadmium batteries, nickel hydrogen batteries, lithium ion batteries, and lithium ion polymer batteries. These secondary batteries have been applied to and used for not only small products such as digital cameras, P-DVDs, MP3Ps, cellular phones, PDAs, portable game devices, power tools, and E-bikes, but also large products requiring high power such as electric vehicles and hybrid vehicles, and power storage devices or backup-power storage devices for storing surplus generated power and new renewable energy.

The secondary batteries are classified into pouch-type batteries, can-type batteries, and the like according to the material of a case that accommodates an electrode assembly. In particular, the can-type batteries are manufactured by accommodating electrode assemblies in hard cans, and secondary batteries having cylindrical cans may be referred to as cylindrical secondary batteries.

Generally, the can-type secondary batteries, in particular, the cylindrical secondary batteries include jelly roll-type electrode assemblies. An electrode active material is applied on an electrode collector having a sheet shape to manufacture an electrode sheet, and the electrode sheet is processed into a desired shape by a notching process. Subsequently, the electrode sheet may be wound together with the separator to manufacture a jelly roll-type electrode assembly. Here, the notching process may be performed by physically cutting an electrode using a press die or by emitting a laser beam onto an electrode to cut same.

In particular, for the notching process by means of the laser beam, the laser beam may be disturbed by scraps cut from the electrode sheet or foreign substances, such as dust particles, generated during a cutting process. In order to prevent the above concern, a laser notching apparatus is required to quickly and reliably remove the scraps and foreign substances.

### DISCLOSURE OF THE INVENTION

### TECHNICAL PROBLEM

An aspect of the present invention provides a laser notching apparatus capable of quickly and reliably removing the scraps and foreign substances.

### TECHNICAL SOLUTION

According to an aspect of the present invention, there is provided a laser notching apparatus capable of forming an electrode tab on an electrode sheet through a notching process. The laser notching apparatus includes: a laser unit configured to emit a laser beam onto the electrode sheet; a rotating drum configured to contact the electrode sheet to move the electrode sheet; a fixed drum positioned on one side of the rotating drum in an axial direction; and a scrap-suctioning part provided in the fixed drum and configured to suction a scrap that is cut from the electrode sheet by the laser beam.

The laser notching apparatus may further include a mask jig which is provided in the fixed drum and faces the laser unit with the electrode sheet therebetween. The scrap-suctioning part may be located on a downstream side of the mask jig with respect to a direction in which the electrode sheet moves.

The scrap-suctioning part may be located between the mask jig and a lowermost end of the fixed drum with respect to a circumferential direction of the fixed drum.

The fixed drum and the rotating drum may be arranged coaxially with each other.

An outer diameter of the fixed drum may correspond to an outer diameter of the rotating drum.

The fixed drum may be configured to face, in a radial direction thereof, a portion of an edge of the electrode sheet in a width direction.

The fixed drum may be provided with a mounting groove to which the scrap-suctioning part is mounted.

The scrap-suctioning part may include a suction hole that extends in a circumferential direction of the fixed drum.

The laser notching apparatus may further include a discharge part which is connected to the scrap-suctioning part and discharges the scrap suctioned into the scrap-suctioning part.

The fixed drum may be provided with an extension portion which extends in an axial direction of the fixed drum and is inserted into the rotating drum.

The rotating drum may surround the extension portion and rotate about the extension portion.

The extension portion may be provided with a discharge path which guides the scrap suctioned into the scrap-suctioning part.

### ADVANTAGEOUS EFFECTS

According to the embodiment of the present disclosure, the scrap-suctioning part is mounted to the fixed drum, and thus, the scraps may be suctioned quickly and reliably compared to the case where the scrap-suctioning part is separately located outside the fixed drum.

Also, the scrap-suctioning part is mounted to the fixed drum, and thus, the scrap-suctioning part may suction and remove not only the scraps but also the foreign substances, such as dust particles, generated during the notching process for the electrode sheet.

In addition, the scrap-suctioning part may be located between the mask jig and the lowermost end of the fixed drum with respect to the circumferential direction of the fixed drum. Accordingly, the scraps may be quickly suctioned into the scrap-suctioning part before drooping downward.

Also, the suction hole of the scrap-suctioning part may extend in the circumferential direction of the fixed drum. Accordingly, the scraps cut from the electrode sheet moving in the circumferential direction of the fixed drum may be more reliably suctioned into the suction hole.

In addition to the effects described above, effects that can be easily predicted by those skilled in the art from the configurations according to the embodiments of the present disclosure may be included.

### BRIEF DESCRIPTION OF THE DRAWINGS

The accompanying drawings illustrate an embodiment of the present disclosure, and together with the detailed description of the present disclosure described below, serve to provide further understanding of the technical ideas of the present disclosure, and thus, the present disclosure should not be construed as being limited to the drawings.
FIG. 1 is a side view of a laser notching apparatus according to an embodiment of the present disclosure.
FIG. 2 is a schematic view illustrating a state in which an electrode sheet of FIG. 1 is being notched.
FIG. 3 is a perspective view of a laser notching apparatus according to an embodiment of the present disclosure.
FIG. 4 is a perspective view of a drum unit illustrated in FIG. 3.
FIG. 5 is a cross-sectional view taken along line A-A' of FIG. 4.
FIG. 6 is a cross-sectional view taken along line B-B' of FIG. 4.
FIG. 7 is a perspective view of a laser notching apparatus according to another embodiment of the present disclosure.
FIG. 8 is a cross-sectional view taken along line C-C' of FIG. 7.

### MODE FOR CARRYING OUT THE INVENTION

Hereinafter, embodiments of the present invention will be described in detail with reference to the accompanying drawings so as to be easily carried out by a person skilled in the art to which the present invention pertains. However, the present invention may be embodied in various different forms, and is neither limited nor restricted to the following embodiments.

In order to clearly describe the present invention, detailed description of parts irrelevant to the invention or detailed descriptions of related well-known technologies that may unnecessarily obscure subject matters of the invention will be omitted. In the specification, when reference numerals are given to components in each of the drawings, the same or similar components will be designated by the same or similar reference numerals throughout the specification.

Also, terms or words used in the description and claims should not be restrictively interpreted as ordinary meanings or dictionary-based meanings, but should be interpreted as meanings and concepts conforming to the technical ideas of the present invention on the basis of the principle that an inventor can properly define the concept of a term so as to describe his or her invention in the best ways.

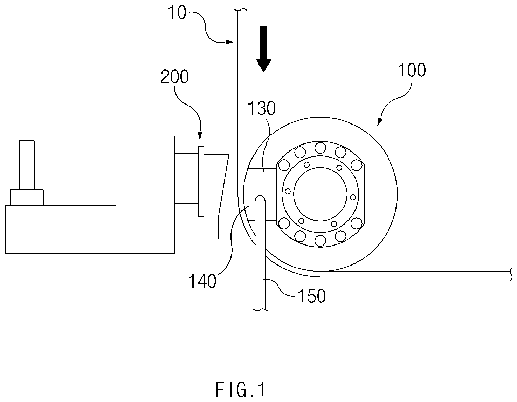

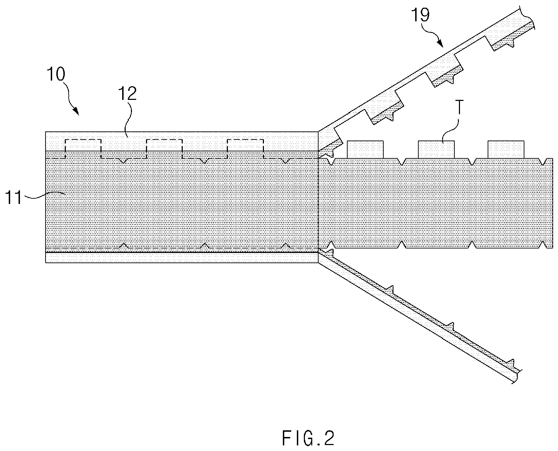

FIG. 1 is a side view of a laser notching apparatus according to an embodiment of the present disclosure, and FIG. 2 is a schematic view illustrating a state in which an electrode sheet of FIG. 1 is being notched.

The laser notching apparatus according to an embodiment of the present disclosure may form an electrode tab T on an electrode sheet 10 through a notching process.

The laser notching apparatus may include a drum unit 100 for moving the electrode sheet 10 and a laser unit 200 for emitting a laser beam onto the electrode sheet 10. The drum unit 100 and the laser unit 200 may be positioned on the sides opposite to each other with respect to the electrode sheet 10.

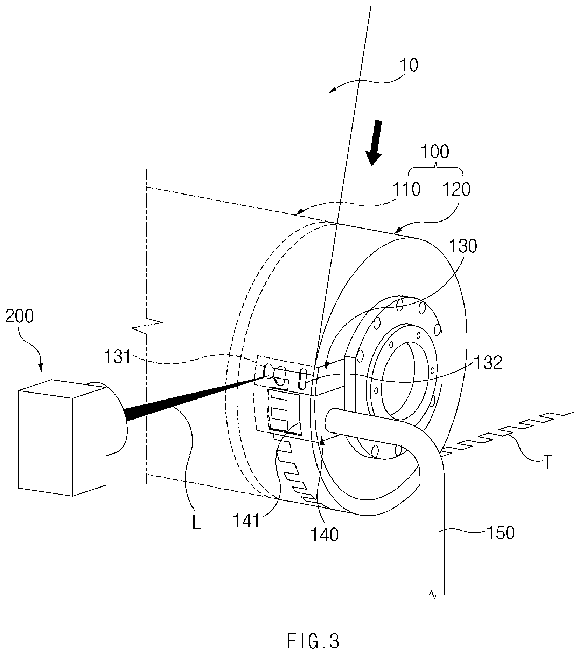

The laser unit 200 may emit a laser beam L (see FIG. 3). The laser unit 200 may regulate the position to which the laser beam L is emitted, and accordingly, the electrode sheet 10 may be notched to form a preset shape. The configuration of the laser unit 200 is well known in the art, and thus, a detailed description thereof is omitted.

Referring to FIG. 2, the electrode sheet 10 may include a coated portion 11, in which an active material is applied on an electrode collector, and an uncoated portion 12, in which an active material is not applied on an electrode collector to expose the electrode collector. The uncoated portions 12 may be positioned on both sides of the coated portion 11 in the width direction. However, the uncoated portion 12 may be positioned on only one side of the coated portion 11 in the width direction.

The laser notching apparatus may notch a portion of an edge of the electrode sheet 10 in the width direction. In more detail, the laser unit 200 may emit the laser beam onto the electrode sheet 10 and notch a portion of the edge of the electrode sheet 10. Hereinafter, the portion of the edge of the electrode sheet 10 in the width direction is referred to as a notching region and then described.

When notching regions of the electrode sheet 10 are provided on both sides of the electrode sheet 10 in the width direction, a pair of laser units 200 spaced apart from each other in the width direction of the electrode sheet 10 may be provided to notch the respective notching regions.

The notching region of the electrode sheet 10 may include the uncoated portion 12. Therefore, the uncoated portion 12 provided on one side of the electrode sheet 10 in the width direction may be processed into the electrode tab T. The uncoated portion 12 provided on the other side of the electrode sheet 10 in the width direction may be notched and removed by the laser notching apparatus, but the embodiment is not limited thereto.

When the notching region of the electrode sheet 10 is notched, a scrap 19 cut from the electrode sheet 10 may be formed. The scrap 19 may be continuously formed and extended. The laser notching apparatus may include a scrap-suctioning part 140 for suctioning the scrap 19. The laser notching apparatus may further include a mask jig 130 that faces the laser unit 200 with the electrode sheet 10 therebetween.

The mask jig 130 and the scrap-suctioning part 140 may be provided in the drum unit 100, more specifically, in a fixed drum 120 described below (see FIG. 3). With respect to a direction in which the electrode sheet 10 moves, the scrap-suctioning part 140 may be located on a downstream side of the mask jig 130.

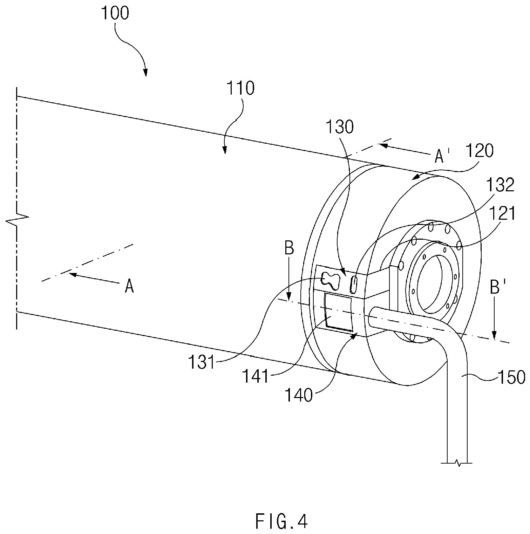

FIG. 3 is a perspective view of a laser notching apparatus according to an embodiment of the present disclosure, and FIG. 4 is a perspective view of a drum unit illustrated in FIG. 3.

The drum unit 100 may include a rotating drum 110, which is in contact with the electrode sheet 10 to move the electrode sheet 10, and a fixed drum 120, which is positioned on one side of the rotating drum 110 in an axial direction.

The rotating drum 110 may be rotated by a driving device such as a motor (not shown), and the fixed drum 120 may be fixed and not rotated. That is, the rotating drum 110 may rotate relative to the fixed drum 120.

The rotating drum 110 and the fixed drum 120 may be arranged coaxially with each other. The axial directions of the rotating drum 110 and the fixed drum 120 may be parallel to the width direction of the electrode sheet 10.

A height difference in the radial direction between the outer circumference of the rotating drum 110 and the outer circumference of the fixed drum 120 may be very small. Preferably, the outer circumference of the rotating drum 110 and the outer circumference of the fixed drum 120 may be located on the same curved surface. That is, the outer diameter of the fixed drum 120 and the outer diameter of the rotating drum 110 may correspond to each other. Here, corresponding to each other represents being similar or identical to each other.

A portion of the electrode sheet 10 may face the rotating drum 110, and another portion thereof may face the fixed drum 120. In more detail, the fixed drum 120 may face the notching region of the electrode sheet 10 in the radial direction thereof. The notching region may include an uncoated portion 12 that is processed into an electrode tab T.

The mask jig 130 may be provided in the fixed drum 120. The mask jig 130 may face the notching region of the electrode sheet 10. The laser unit 200 may face the mask jig 130 with the notching region of the electrode sheet 10 therebetween. The mask jig 130 may be in close contact with the notching region of the electrode sheet 10. Accordingly, it is possible to prevent unnecessary movement of the electrode sheet S during the notching process.

The mask jig 130 may be provided with a cutting hole 131. The mask jig 130 may be further provided with a foreign substance-collecting hole 132.

The laser unit 200 may face the cutting hole 131 with the notching region of the electrode sheet 10 therebetween. Therefore, the laser beam L emitted from the laser unit 200 and cutting the notching region may pass through the cutting hole 311. In order to form the electrode tab T by notching the notching region of the moving electrode sheet 10 into a preset shape, the shape of the cutting hole 131 may be determined according to the shape of the electrode tab T.

The foreign substance-collecting hole 132 may be located near the cutting hole 131. The foreign substance-collecting hole 132 may collect foreign substances, such as dust particles, generated during the notching process.

Instead, foreign substances, the foreign substance-collecting hole 132 is not provided in the mask jig 130, and such as dust particles may be collected in a suction hole 141 of the scrap-suctioning part 140 which is described below.

The scrap-suctioning part 140 may be provided in the fixed drum 120. In more detail, the fixed drum 120 may be provided with a mounting groove 121 to which the scrap-suctioning part 140 is mounted.

The mounting groove 121 may be formed by recessing inward or cutting out a portion of the outer circumference of the fixed drum 120. In addition, the mounting groove 121 may be open toward the opposite side of the fixed drum 120 from the rotating drum 110 in the axial direction.

The mask jig 130 may be mounted, together with the scrap-suctioning part 140, to the mounting groove 121. For example, the scrap-suctioning part 140 may be mounted to the mounting groove 121 while being integrally formed with the mask jig 130 or fastened to each other. However, the embodiment is not limited thereto, and a separate groove, to which the mask jig 130 is mounted, may be formed in the fixed drum 120.

The scrap-suctioning part 140 may suction the scrap 19 (see FIG. 2 ) and continuously remove the scrap 19 from the notched electrode sheet 10.

The scrap-suctioning part 140 is mounted to the fixed drum 120, and thus, the scrap 19 may be suctioned quickly and reliably compared to the case where the scrap-suctioning part is separated from the drum unit 100 and located outside the drum unit 100.

The laser beam L is emitted toward the mask jig 130 and notches the notching region of the electrode sheet 10. During this process, the scrap 19 may be generated. Therefore, the removal of the scrap 19 has to be performed after the notching process. For this, the scrap-suctioning part 140 may be located on a downstream side of the mask jig 130 with respect to a direction in which the electrode sheet 10 moves.

The scrap-suctioning part 140 may be located between the mask jig 130 and the lowermost end of the fixed drum 120 with respect to the circumferential direction of the fixed drum 120. Accordingly, before the scrap 19 droops downward, the scrap-suctioning part 140 may quickly suction the scrap 19.

The scrap-suctioning part 140 may be provided with a suction hole 141 for suctioning the scrap 19. A negative pressure may act on the suction hole 141 to suction the scrap 19. The suction hole 141 may suction and remove not only the scrap 19 but also foreign substances, such as dust particles, generated during the notching process for the electrode sheet 10.

The suction hole 141 may extend in the circumferential direction of the fixed drum 120. Accordingly, the scrap 19 cut from the electrode sheet 10 moving in the circumferential direction of the fixed drum 120 may be more reliably suctioned into the suction hole 141.

Also, the laser notching apparatus may further include a discharge part 150 which is connected to the scrap-suctioning part 140 and discharges the scrap 19 suctioned into the scrap-suctioning part 140.

The discharge part 150 may have a pipe shape. The discharge part 150 may be connected to the scrap-suctioning part 140 on the outside of the fixed drum 120 in the axial direction.

Here, when edges on both sides of the electrode sheet 10 in the width direction are notched, a pair of laser units 200 may be provided as described above. In this case, a pair of fixed drums 120 may be provided on both sides of the rotating drum 110 in the axial direction. The mask jig 130 and the scrap-suctioning part 140 may be provided in each of the fixed drums 120, and the discharge part 150 may be connected to the each of the fixed drums 120.

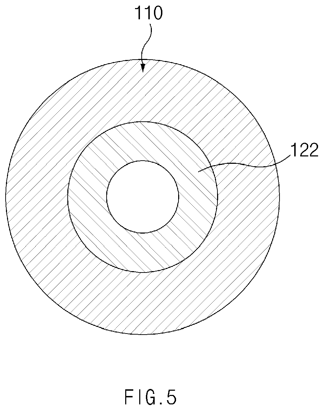

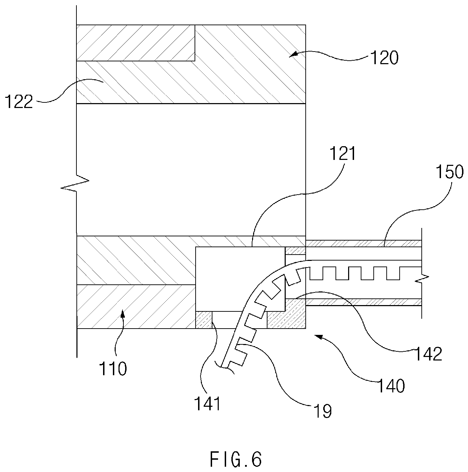

FIG. 5 is a cross-sectional view taken along line A-A' of FIG. 4, and FIG. 6 is a cross-sectional view taken along line B-B' of FIG. 4.

The rotating drum 110 may have a cavity therein. Also, the fixed drum 120 may be provided with an extension portion 122 which extends in an axial direction of the fixed drum 120 and is inserted into the rotating drum 110.

The rotating drum 110 may surround the extension portion 122 and rotate about the extension portion 122. The inner circumference of the rotating drum 110 and the outer circumference of the extension portion 122 may face each other. For smooth rotation of the rotating drum 110, a bearing (not shown) may be provided between the inner circumference of the rotating drum 110 and the outer circumference of the extension portion 122.

Therefore, the fixed drum 120 and the rotating drum 110 may be easily connected to each other, and a coaxial relationship between the fixed drum 120 and the rotating drum 110 may be stably maintained.

Each of the fixed drum 120 and the extension portion 122 may have a cavity therein. Although not illustrated in FIGS. 5 and 6, a rotating shaft that rotates together with the rotating drum 110 may be located in the inner cavities of the fixed drum 120 and the extension portion 122.

Here, a certain chamber communicating with the suction hole 141 may be provided inside the scrap-suctioning part 140. Therefore, the scrap 19 may be suctioned into the chamber via the suction hole 141.

The chamber may be a space that is defined by covering the mounting groove 121 of the fixed drum 120 with the scrap-suctioning part 140. However, the embodiment is not limited thereto, and an inner space surrounded by the scrap-suctioning part 140 may be defined as the chamber.

Also, the chamber may communicate with the inside of the mask jig 130. Therefore, foreign substances, such as dust particles, may be suctioned into the chamber via the foreign substance-collecting hole 132 of the mask jig 130. However, the embodiment is not limited thereto, and a separate chamber may be formed inside the mask jig 130.

The scrap-suctioning part 140 may be provided with a connection hole 142 to which the discharge part 150 is connected. The connection hole 142 communicates with the chamber and may pass through toward the outside of the fixed drum 120 in the axial direction. Therefore, the scrap 19, which is suctioned into the chamber via the suction hole 141 of the scrap-suctioning part 140, may be discharged to the discharge part 150 via the connection hole 142.

A suction device (not shown) for generating negative pressure may be connected to the discharge part 150. Therefore, the negative pressure may act on the inside of the discharge part 150, and the negative pressure may act even on the chamber and the suction hole 141 via the connection hole 142. Accordingly, scraps 19 and foreign substances, such as dust particles, generated during the notching process of the electrode sheet 10 may be quickly suctioned into the suction hole 141.

In addition, the foreign substances and the scraps 19 suctioned into the suction hole 141 are discharged to the discharge part 150, and thus, an idle time of equipment for removing the foreign substances and the scraps 19 is reduced, thereby enhancing the efficiency of the notching process.

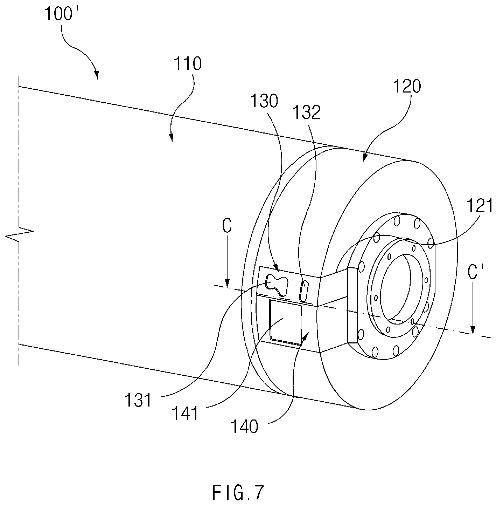

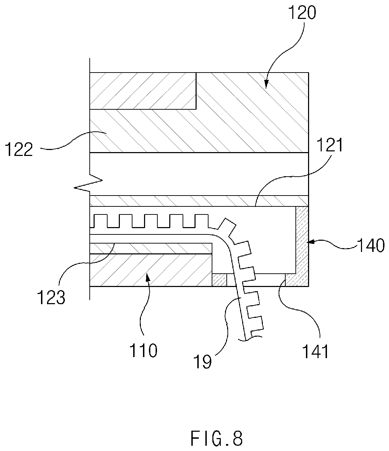

FIG. 7 is a perspective view of a laser notching apparatus according to another embodiment of the present disclosure, and FIG. 8 is a cross-sectional view taken along line C-C' of FIG. 7.

A laser notching apparatus according to another embodiment of the present disclosure is the same as the above-described embodiment, except that the scrap 19 is discharged via a path 123 inside a drum unit 100' instead of the discharge part 150. Therefore, hereinafter, contents overlapping those described above are omitted, and differences therebetween are mainly described.

An extension portion 122 of a fixed drum 120 according to another embodiment of the present disclosure may be provided with a discharge path 123 for guiding a scrap 19 suctioned into a scrap-suctioning part 140.

The discharge path 123 may be provided between the outer circumference and the inner circumference of the extension portion 122. The extension portion 122 is fixed without rotation like the fixed drum 120. Therefore, the discharge path 123 does not shake, and the scrap 19 may be stably discharged into the discharge path 123.

The discharge path 123 may communicate with a chamber inside the scrap-suctioning part 140. Therefore, the scrap 19, which is suctioned into the chamber via a suction hole 141 of the scrap-suctioning part 140, may be discharged to the discharge path 123.

The discharge path 123 may extend to an end of the extension portion 122. The end of the extension portion 122 may be located inside the rotating drum 110 or protrude from the rotating drum 110 in the axial direction of the rotating drum 110.

A suction device (not shown) for generating negative pressure may be connected to the discharge path 123. Therefore, the negative pressure may act on the inside of the discharge path 123, and the negative pressure may act even on the chamber and the suction hole 141. Accordingly, scraps 19 and foreign substances, such as dust particles, generated during the notching process of the electrode sheet 10 may be quickly suctioned into the suction hole 141.

In addition, the foreign substances and the scraps 19 suctioned into the suction hole 141 are discharged to the discharge path 123, and thus, an idle time of equipment for removing the foreign substances and the scraps 19 is reduced, thereby enhancing the efficiency of the notching process.

In this embodiment, there is no need to connect a separate discharge part 150 to the fixed drum 120, and thus, a space required for installation of the discharge part 150 may be reduced.

The technical ideas of the present disclosure have been described merely for illustrative purposes, and those skilled in the art will appreciate that various changes and modifications are possible without departing from the essential features of the present disclosure.

Thus, the embodiments of the present disclosure are to be considered illustrative and not restrictive, and the technical idea of the present disclosure is not limited to the foregoing embodiments.

The protective scope of the present disclosure is defined by the appended claims, and all technical ideas within their equivalents should be interpreted as being included in the scope of the present disclosure.

**[Description of the Symbols]**

| | | | |
|---|---|---|---|
| 10: | electrode sheet | 11: | coated portion |
| 12: | uncoated portion | 19: | scrap |
| T: | electrode tab | 100: | drum unit |
| 110: | rotating drum | 120: | fixed drum |
| 121: | mounting groove | 122: | extension portion |
| 123: | discharge path | 130: | mask jig |
| 131: | cutting hole | 132: | foreign substance-collecting hole |
| 140: | scrap-suctioning part | 141: | suction hole |
| 142: | connection hole | 150: | discharge part |
| 200: | laser unit | | |

## Claims

1. A laser notching apparatus for forming an electrode tab on an electrode sheet through a notching process, the laser notching apparatus comprising:
a laser unit configured to emit a laser beam onto the electrode sheet;
a rotating drum configured to contact the electrode sheet to move the electrode sheet;
a fixed drum positioned on one side of the rotating drum in an axial direction; and
a scrap-suctioning part provided in the fixed drum and configured to suction a scrap that is cut from the electrode sheet by the laser beam.

2. The laser notching apparatus of claim 1, further comprising a mask jig which is provided in the fixed drum and faces the laser unit with the electrode sheet therebetween,
wherein the scrap-suctioning part is located on a downstream side of the mask jig with respect to a direction in which the electrode sheet moves.

3. The laser notching apparatus of claim 2, wherein the scrap-suctioning part is located between the mask jig and a lowermost end of the fixed drum with respect to a circumferential direction of the fixed drum.

4. The laser notching apparatus of claim 1, wherein the fixed drum and the rotating drum are arranged coaxially with each other.

5. The laser notching apparatus of claim 4, wherein an outer diameter of the fixed drum corresponds to an outer diameter of the rotating drum.

6. The laser notching apparatus of claim 1, wherein the fixed drum is configured to face, in a radial direction thereof, a portion of an edge of the electrode sheet in a width direction.

7. The laser notching apparatus of claim 1, wherein the fixed drum is provided with a mounting groove to which the scrap-suctioning part is mounted.

8. The laser notching apparatus of claim 1, wherein the scrap-suctioning part comprises a suction hole that extends in a circumferential direction of the fixed drum.

9. The laser notching apparatus of claim 1, further comprising a discharge part which is connected to the scrap-suctioning part and discharges the scrap suctioned into the scrap-suctioning part.

10. The laser notching apparatus of claim 1, wherein the fixed drum is provided with an extension portion which extends in an axial direction of the fixed drum and is inserted into the rotating drum.

11. The laser notching apparatus of claim 10, wherein the rotating drum surrounds the extension portion and rotates about the extension portion.

12. The laser notching apparatus of claim 10, wherein the extension portion is provided with a discharge path which guides the scrap suctioned into the scrap-suctioning part.
